# EUROPEAN PATENT APPLICATION

(11) **EP 4 788 027 A1**
(43) Date of publication of application: **05.08.2026**
(21) Application number: 24884622.2
(22) Date of filing: 26.10.2024
(51) Int. Cl.: H04W 72/40

(54) **RESOURCE STATE CONFIRMATION METHOD, APPARATUS AND SYSTEM, AND STORAGE MEDIUM**

(30) Priority: 31.10.2023 CN 202311444356
(71) Applicant: HUAWEI TECHNOLOGIES CO., LTD., Shenzhen 518129 (CN)
(72) Inventor: XIA, Jinhuan, Shenzhen, Guangdong 518129 (CN)
(74) Representative: Isarpatent
(86) International application number: PCT/CN2024/127553
(87) International publication number: WO 2025/092619

(57) **Abstract**

A resource status confirmation method, an apparatus, a system, and a storage medium are provided. An access network device sends, to a terminal, downlink control information used to activate or deactivate a first configured grant resource. The access network device receives first information sent by the terminal, where the first information indicates a status of at least one configured second configured grant resource, and a first identifier included in the first information is different from a second identifier in second information used to confirm a status of a CG Type2 resource configured for sidelink communication, so that a status of a CG Type2 resource used to send an SL-PRS is confirmed, with no conflict with the second information.

## Description

This application claims priority to Chinese Patent Application No. 202311444356.X, filed with the China National Intellectual Property Administration on October 31, 2023 and entitled "RESOURCE STATUS CONFIRMATION METHOD, APPARATUS, SYSTEM, AND STORAGE MEDIUM", which is incorporated herein by reference in its entirety.

### TECHNICAL FIELD

This application relates to the field of communication technologies, and in particular, to a resource status confirmation method, an apparatus, a system, and a storage medium.

### BACKGROUND

Sidelink-positioning reference signals (sidelink-positioning reference signal, SL-PRS) may be sent/received between terminals on a dedicated resource pool. When the SL-PRSs are sent on the dedicated resource pool, there are two resource allocation modes. In mode 1, allocated resources may include dynamic grant (dynamic grant, DG) resources dynamically scheduled by a network device and configured grant (configured grant, CG) resources. The configured grant resource may further include two types: a configured grant type 1 (CG Type1) and a configured grant type 2 (CG Type2). The CG Type2 refers to a configured grant for which activation or deactivation of an SL-PRS resource grant is provided by a physical downlink control channel (physical downlink control channel, PDCCH). When the PDCCH activates the CG Type2 resource, a transmitting terminal stores the SL-PRS resource grant. When the PDCCH deactivates the CG Type2 resource, the transmitting terminal clears the stored SL-PRS resource grant.

However, when the PDCCH activates the CG Type2 resource, but the terminal does not receive the PDCCH, or receives the PDCCH but does not make confirmation, the network device considers that the CG Type2 resource has been activated while the terminal considers that the CG Type2 resource has not been activated. The network device reserves the CG Type2 resource, but actually the terminal does not perform transmission on the CG Type2 resource, causing a waste of resources.

Existing techniques have enabled reporting, via medium access control control elements (medium access control control element, MAC CE), of the status of CG Type2 resources for sidelink (sidelink, SL) communication.

Therefore, how to confirm a status of CG Type2 resources of an SL-PRS in a dedicated SL-PRS resource pool is a problem to be resolved.

### SUMMARY

This application provides a resource status confirmation method, an apparatus, a system, and a storage medium, to confirm a status of a CG Type2 resource of an SL-PRS in a dedicated SL-PRS resource pool, with no conflict with information used to confirm a status of a CG Type2 resource used for sidelink communication.

According to a first aspect, a resource status confirmation method is provided, where the method is implemented by a terminal, or a circuit or a chip used in the terminal.

The method includes: receiving downlink control information, where the downlink control information is used to activate or deactivate a first configured grant resource; and sending first information in response to the downlink control information, where the first information indicates a status of at least one configured second configured grant resource, the at least one second configured grant resource includes the first configured grant resource, the at least one second configured grant resource is used to send a sidelink-positioning reference signal, the first information includes a first identifier, the first identifier is different from a second identifier in second information, the second information indicates a status of at least one configured third configured grant resource, and the at least one third configured grant resource is used to send a physical sidelink control channel and/or a physical sidelink shared channel.

According to the method, when receiving the downlink control information that is used to activate or deactivate the first configured grant resource and that is sent by an access network device, the terminal sends the first information to the access network device, where the first information indicates the status of the at least one configured second configured grant resource, and the first identifier included in the first information is different from the second identifier in the second information used to confirm a status of a CG Type2 resource configured for sidelink communication, so that a status of a CG Type2 resource used to send an SL-PRS is confirmed, with no conflict with the second information.

According to a second aspect, a resource status confirmation method is provided, where the method is implemented by an access network device, or a circuit or a chip used in the access network device.

The method includes: sending downlink control information, where the downlink control information is used to activate or deactivate a first configured grant resource; and receiving first information in response to the downlink control information, where the first information indicates a status of at least one configured second configured grant resource, the at least one second configured grant resource includes the first configured grant resource, the at least one second configured grant resource is used to send a sidelink-positioning reference signal, the first information includes a first identifier, the first identifier is different from a second identifier in second information, the second information indicates a status of at least one configured third configured grant resource, and the at least one third configured grant resource is used to send a physical sidelink control channel and/or a physical sidelink shared channel.

According to the method, the access network device sends, to a terminal, the downlink control information used to activate or deactivate the first configured grant resource. The access network device receives the first information sent by the terminal, where the first information indicates the status of the at least one configured second configured grant resource, and the first identifier included in the first information is different from the second identifier in the second information used to confirm a status of a CG Type2 resource configured for sidelink communication, so that a status of a CG Type2 resource used to send an SL-PRS is confirmed, with no conflict with the second information.

With reference to the first aspect or the second aspect, in a possible implementation, the downlink control information is DCI 3_2, and the second information is used to respond to DCI 3_0.

With reference to the first aspect or the second aspect, in another possible implementation, the downlink control information includes an index of the first configured grant resource.

With reference to the first aspect or the second aspect, in still another possible implementation, the first information is a first medium access control control element, the first medium access control control element indicates the status of the at least one second configured grant resource, and the status includes an activated state and a deactivated state.

With reference to the first aspect or the second aspect, in still another possible implementation, the second information is a second medium access control control element, the medium access control control element indicates a status of at least one fourth configured grant resource, and the status includes an activated state and a deactivated state.

With reference to the first aspect or the second aspect, in still another possible implementation, the first identifier is a first extended logical channel identifier, and the second identifier is a second extended logical channel identifier.

According to a third aspect, a resource status confirmation method is provided, where the method is implemented by a terminal, or a circuit or a chip used in the terminal.

The method includes: receiving downlink control information, where the downlink control information is used to activate or deactivate a first configured grant resource; and sending first information in response to the downlink control information, where the first information indicates a status of at least one configured second configured grant resource and/or a status of at least one configured third configured grant resource, the at least one second configured grant resource and/or the at least one third configured resource include/includes the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource.

According to the method, an index of a CG Type2 resource configured for sidelink communication is set to be different from an index of a CG Type2 resource of an SL-PRS in a dedicated SL-PRS resource pool, so that both a status of the CG Type2 resource configured for sidelink communication and a status of the CG Type2 resource of the SL-PRS in the dedicated SL-PRS resource pool can be confirmed by using one piece of information.

According to a fourth aspect, a resource status confirmation method is provided, where the method is implemented by an access network device, or a circuit or a chip used in the access network device.

The method includes: sending downlink control information, where the downlink control information is used to activate or deactivate a first configured grant resource; and
receiving first information in response to the downlink control information, where the first information indicates a status of at least one configured second configured grant resource and/or a status of at least one configured third configured grant resource, the at least one second configured grant resource and/or the at least one third configured resource include/includes the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource.

According to the method, an index of a CG Type2 resource configured for sidelink communication is set to be different from an index of a CG Type2 resource of an SL-PRS in a dedicated SL-PRS resource pool, so that both a status of the CG Type2 resource configured for sidelink communication and a status of the CG Type2 resource of the SL-PRS in the dedicated SL-PRS resource pool can be confirmed by using one piece of information.

With reference to the third aspect or the fourth aspect, in a possible implementation, the downlink control information includes an index of the first configured grant resource.

With reference to the third aspect or the fourth aspect, in another possible implementation, the first information is a medium access control control element, the medium access control control element includes a first field and/or a second field, the first field indicates the status of the at least one second configured grant resource, the second field indicates the status of the at least one third configured grant resource, and the status includes an activated state and a deactivated state.

With reference to the third aspect or the fourth aspect, in still another possible implementation, a sum of a quantity of the at least one second configured grant resource and a quantity of the at least one third configured grant resource is less than or equal to a first threshold.

According to a fifth aspect, a resource status confirmation method is provided, where the method is implemented by a terminal, or a circuit or a chip used in the terminal.

The method includes: receiving first downlink control information, where the first downlink control information is used to activate or deactivate a first configured grant resource; sending first information in response to the first downlink control information, where the first information indicates a status of at least one configured second configured grant resource, and the at least one second configured grant resource includes the first configured grant resource; receiving second downlink control information, where the second downlink control information is used to activate or deactivate a third configured grant resource; and sending second information in response to the second downlink control information, where the second information indicates a status of at least one configured fourth configured grant resource, and the at least one fourth configured grant resource includes the third configured grant resource. A channel or a signal carried on the at least one second configured grant resource is different from a channel or a signal carried on the at least one fourth configured grant resource, and the second downlink control information is not received before the first information is sent.

Alternatively, the method includes: receiving first downlink control information and second downlink control information, where the first downlink control information is used to activate or deactivate a first configured grant resource, and the second downlink control information is used to activate or deactivate a third configured grant resource; and sending first information in response to the first downlink control information, and sending second information in response to the second downlink control information, where the first information indicates a status of at least one configured second configured grant resource, the at least one second configured grant resource includes the first configured grant resource, the second information indicates a status of at least one configured fourth configured grant resource, and the at least one fourth configured grant resource includes the third configured grant resource. A channel or a signal carried on the at least one second configured grant resource is different from a channel or a signal carried on the at least one fourth configured grant resource, and the second downlink control information is not received before the first information is sent.

For the terminal, that the terminal does not receive the second downlink control information before sending the first information may also be understood as that the terminal does not expect an access network device to send the second downlink control information, or the terminal receives the second downlink control information after sending the first information.

According to the method, before sending the first information used to confirm the status of the at least one second configured grant resource, the terminal does not receive the second control information that is used to activate or deactivate the third configured grant resource and that is sent by the access network device, and before receiving the first information, the access network device does not require the terminal to receive the second downlink control information, so that both the terminal and the access network device confirm that the first information is used to confirm the status of the at least one second configured grant resource, thereby accurately feeding back the status of the configured grant resource.

According to a sixth aspect, a resource status confirmation method is provided, where the method is implemented by an access network device, or a circuit or a chip used in the access network device.

The method includes: sending first downlink control information, where the first downlink control information is used to activate or deactivate a first configured grant resource; receiving first information in response to the first downlink control information, where the first information indicates a status of at least one configured second configured grant resource, and the at least one second configured grant resource includes the first configured grant resource; sending second downlink control information, where the second downlink control information is used to activate or deactivate a third configured grant resource; and receiving second information in response to the second downlink control information, where the second information indicates a status of at least one configured fourth configured grant resource, and the at least one fourth configured grant resource includes the third configured grant resource. A channel or a signal carried on the at least one second configured grant resource is different from a channel or a signal carried on the at least one fourth configured grant resource, and the second downlink control information is not sent before the first information is received.

Alternatively, the method includes: sending first downlink control information and second downlink control information, where the first downlink control information is used to activate or deactivate a first configured grant resource, and the second downlink control information is used to activate or deactivate a third configured grant resource; and receiving first information in response to the first downlink control information, and receiving second information in response to the second downlink control information, where the first information indicates a status of at least one configured second configured grant resource, the at least one second configured grant resource includes the first configured grant resource, the second information indicates a status of at least one configured fourth configured grant resource, and the at least one fourth configured grant resource includes the third configured grant resource. A channel or a signal carried on the at least one second configured grant resource is different from a channel or a signal carried on the at least one fourth configured grant resource, and the second downlink control information is not sent before the first information is received.

That the access network device does not send the second downlink control information before receiving the first information may be understood as that before receiving the first information, the access network device does not require a terminal to receive the second downlink control information, or sends the second downlink control information after receiving the first information.

With reference to the fifth aspect or the sixth aspect, in a possible implementation, the first downlink control information includes an index of the first configured grant resource, and the second downlink control information includes an index of the third configured grant resource.

According to the method, before sending the first information used to confirm the status of the at least one second configured grant resource, the terminal does not receive the second control information that is used to activate or deactivate the third configured grant resource and that is sent by the access network device, and before receiving the first information, the access network device does not require the terminal to receive the second downlink control information, so that both the terminal and the access network device confirm that the first information is used to confirm the status of the at least one second configured grant resource, thereby accurately feeding back the status of the configured grant resource.

With reference to the fifth aspect or the sixth aspect, in another possible implementation, the first information is a first medium access control control element, and the first medium access control control element indicates the status of the at least one second configured grant resource. The second information is a second medium access control control element, and the second medium access control control element indicates the status of the at least one fourth configured grant resource. The status includes an activated state and a deactivated state.

According to a seventh aspect, a communication apparatus is provided, and is configured to implement the resource status confirmation method according to any one of the first aspect, the third aspect, and the fifth aspect or the implementations of the first aspect, the third aspect, and the fifth aspect. The apparatus may be a terminal, or may be a module (for example, a processor, a chip, or a chip system) used in the terminal, or may be a logical node, a logical module, or software that can implement all or some functions of the terminal.

According to an eighth aspect, a communication apparatus is provided, and is configured to implement the resource status confirmation method according to any one of the second aspect, the fourth aspect, and the sixth aspect or the implementations of the second aspect, the fourth aspect, and the sixth aspect. The apparatus may be an access network device, or may be a module (for example, a processor, a chip, or a chip system) used in the access network device, or may be a logical node, a logical module, or software that can implement all or some functions of the access network device.

In a possible implementation, the communication apparatuses in the seventh aspect and the eighth aspect include units configured to separately perform the method according to any one of the first aspect to the sixth aspect or the implementations of the first aspect to the sixth aspect.

For example, the communication apparatus includes a transceiver unit and a processing unit.

When the communication apparatus is configured to implement the method according to any one of the first aspect or the implementations of the first aspect, the transceiver unit is configured to receive downlink control information, where the downlink control information is used to activate or deactivate a first configured grant resource; the processing unit is configured to generate first information in response to the downlink control information, where the first information indicates a status of at least one configured second configured grant resource, the at least one second configured grant resource includes the first configured grant resource, the at least one second configured grant resource is used to send a sidelink-positioning reference signal, the first information includes a first identifier, the first identifier is different from a second identifier in second information, the second information indicates a status of at least one configured third configured grant resource, and the at least one third configured grant resource is used to send a physical sidelink control channel and/or a physical sidelink shared channel; and the transceiver unit is configured to send the first information.

When the communication apparatus is configured to implement the method according to any one of the second aspect or the implementations of the second aspect, the processing unit is configured to generate downlink control information, where the downlink control information is used to activate or deactivate a first configured grant resource; the transceiver unit is configured to send the downlink control information; and the transceiver unit is further configured to receive first information in response to the downlink control information, where the first information indicates a status of at least one configured second configured grant resource, the at least one second configured grant resource includes the first configured grant resource, the at least one second configured grant resource is used to send a sidelink-positioning reference signal, the first information includes a first identifier, the first identifier is different from a second identifier in second information, the second information indicates a status of at least one configured third configured grant resource, and the at least one third configured grant resource is used to send a physical sidelink control channel and/or a physical sidelink shared channel.

When the communication apparatus is configured to implement the method according to any one of the third aspect or the implementations of the third aspect, the transceiver unit is configured to receive downlink control information, where the downlink control information is used to activate or deactivate a first configured grant resource; the processing unit is configured to generate first information in response to the downlink control information, where the first information indicates a status of at least one configured second configured grant resource and/or a status of at least one configured third configured grant resource, the at least one second configured grant resource and/or the at least one third configured resource include/includes the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource; and the transceiver unit is further configured to send the first information.

When the communication apparatus is configured to implement the method according to any one of the fourth aspect or the implementations of the fourth aspect, the processing unit is configured to generate downlink control information, where the downlink control information is used to activate or deactivate a first configured grant resource; the transceiver unit is configured to send the downlink control information; and the transceiver unit is further configured to receive first information in response to the downlink control information, where the first information indicates a status of at least one configured second configured grant resource and/or a status of at least one configured third configured grant resource, the at least one second configured grant resource and/or the at least one third configured resource include/includes the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource.

When the communication apparatus is configured to implement the method according to any one of the fifth aspect or the implementations of the fifth aspect, the transceiver unit is configured to receive first downlink control information, where the first downlink control information is used to activate or deactivate a first configured grant resource; the processing unit is configured to generate first information in response to the first downlink control information, where the first information indicates a status of at least one configured second configured grant resource, and the at least one second configured grant resource includes the first configured grant resource; the transceiver unit is further configured to send the first information; the transceiver unit is further configured to receive second downlink control information, where the second downlink control information is used to activate or deactivate a third configured grant resource; the processing unit is further configured to generate second information in response to the second downlink control information, where the second information indicates a status of at least one configured fourth configured grant resource, and the at least one fourth configured grant resource includes the third configured grant resource; and the transceiver unit is further configured to send the second information. A channel or a signal carried on the at least one second configured grant resource is different from a channel or a signal carried on the at least one fourth configured grant resource, and the second downlink control information is not received before the first information is sent.

When the communication apparatus is configured to implement the method according to any one of the sixth aspect or the implementations of the sixth aspect, the processing unit is configured to generate first downlink control information, where the first downlink control information is used to activate or deactivate a first configured grant resource; the transceiver unit is configured to send the first downlink control information; the transceiver unit is further configured to receive first information in response to the first downlink control information, where the first information indicates a status of at least one configured second configured grant resource, and the at least one second configured grant resource includes the first configured grant resource; the processing unit is further configured to generate second downlink control information, where the second downlink control information is used to activate or deactivate a third configured grant resource; the transceiver unit is further configured to send the second downlink control information; and the transceiver unit is further configured to receive second information in response to the second downlink control information, where the second information indicates a status of at least one configured fourth configured grant resource, and the at least one fourth configured grant resource includes the third configured grant resource. A channel or a signal carried on the at least one second configured grant resource is different from a channel or a signal carried on the at least one fourth configured grant resource, and the second downlink control information is not sent before the first information is received.

In another possible implementation, the communication apparatuses in the seventh aspect and the eighth aspect each include a processor coupled to a memory. The processor is configured to implement a corresponding function in the foregoing resource status confirmation method performed by the apparatus. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In still another possible implementation, the communication apparatuses in the seventh aspect and the eighth aspect each include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatuses in the seventh aspect and the eighth aspect each are a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a ninth aspect, a computer-readable storage medium is provided. The computer-readable storage medium stores a computer program or instructions. When the computer program or the instructions are executed, the methods in the foregoing aspects are implemented.

According to a tenth aspect, a computer program product including instructions is provided. When the instructions are run on a communication apparatus, the communication apparatus is caused to perform the methods in the foregoing aspects.

According to an eleventh aspect, a communication system is provided. The communication system includes the communication apparatus according to the seventh aspect and the communication apparatus according to the eighth aspect.

### BRIEF DESCRIPTION OF DRAWINGS

FIG. 1 is a diagram of a communication system according to an embodiment of this application;
FIG. 2 is a diagram of an example of sidelink channel and signal mapping according to an embodiment of this application;
FIG. 3 is a diagram of an example of a dedicated SL-PRS resource pool according to an embodiment of this application;
FIG. 4 is a diagram of a format of a medium access control control element;
FIG. 5 is a schematic flowchart of a resource status confirmation method according to an embodiment of this application;
FIG. 6 is a schematic flowchart of another resource status confirmation method according to an embodiment of this application;
FIG. 7 is a schematic flowchart of still another resource status confirmation method according to an embodiment of this application;
FIG. 8 is a diagram of resource status confirmation according to the embodiment shown in FIG. 7;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of still another communication apparatus according to an embodiment of this application.

### DESCRIPTION OF EMBODIMENTS

The following further describes the solutions of this application with reference to the accompanying drawings.

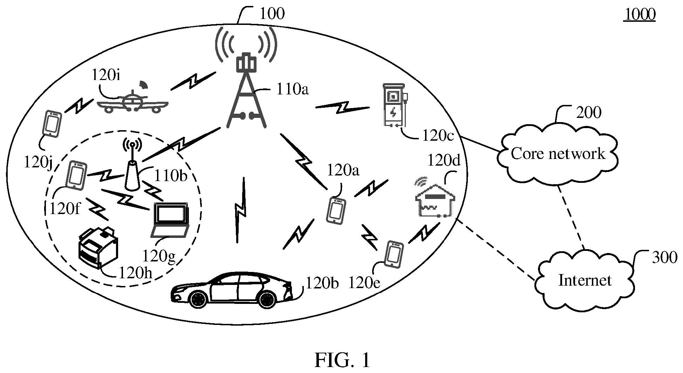

FIG. 1 is a diagram of a possible and non-limiting system. As shown in FIG. 1, the communication system 1000 includes a radio access network (radio access network, RAN) 100 and a core network (core network, CN) 200. The communication system 1000 may further include the internet 300. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be referred to as an access network device, a RAN entity, an access node, or the like sometimes, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For those terminals 120j that access the RAN 100 via the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes assist the terminal in implementing radio access, and different RAN nodes separately implement some functions of a base station. For example, the RAN node may be a central unit (central unit, CU), a distributed unit (distributed unit, DU), a central unit-control plane (central unit-control plane, CU-CP), a central unit-user plane (central unit-user plane, CU-UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open-central unit (open-CU, O-CU), the DU may also be referred to as an open-distributed unit (open-distributed unit, O-DU), the CU-CP may also be referred to as an open-central unit-control plane (open-central unit-control plane, O-CU-CP), the CU-UP may also be referred to as an open-central unit-user plane (open-central unit-user plane, O-CU-UP), and the RU may also be referred to as an open-radio unit (open-radio unit, O-RU). For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between the network elements in the ORAN system and protocol layer functions that may be implemented by the network elements, refer to Table 1.

**Table 1**

| ORAN network element | 3GPP protocol layer function |
|---|---|
| O-CU-CP | RRC+PDCP-C |
| O-CU-UP | SDAP+PDCP-U |
| O-DU | RLC+MAC+PHY-high |
| O-RU | PHY-low |

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative to each other. For example, the helicopter or the uncrewed aerial vehicle 120i in FIG. 1 may be configured as a mobile base station. For those terminals 120j that access the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

In embodiments of this application, the base station is also referred to as an access network device. An apparatus configured to implement a function of the access network device may be an access network device, or may be an apparatus that can support the access network device in implementing the function, for example, a chip system, a hardware circuit, a software module, or a combination of a hardware circuit and a software module. The apparatus may be installed in the access network device or used in conjunction with the access network device. In embodiments of this application, an example in which the apparatus configured to implement the function of the access network device is an access network device is merely used for description, and constitutes no limitation on the solutions in embodiments of this application.

It may be understood that this application may be applied between the access network device and the terminal.

It should be understood that quantities and types of devices in the communication system shown in FIG. 1 are merely used as an example, and this application is not limited thereto. In actual application, the communication system may further include more terminals and more access network devices, and may further include another network element, for example, may include a core network device and/or a network element configured to implement an artificial intelligence function.

It may be understood that all or some functions implemented by one or more of the terminal, the access network device, the core network device, or the network element configured to implement the artificial intelligence function may be virtualized, that is, implemented through one or two of a dedicated processor or a general-purpose processor and a corresponding software module. Because the terminal and the access network device are related to an air interface transmission interface, a transceiver function of the interface may be implemented by hardware. Core network devices such as an operations, administration, and maintenance (operations, administration, and maintenance, OAM) network element can all be virtualized. Optionally, one or more functions in the virtualized terminal, access network device, core network device, or network element configured to implement the artificial intelligence function may be implemented by a cloud device, for example, implemented by a cloud device in an over-the-top (over-the-top, OTT) system.

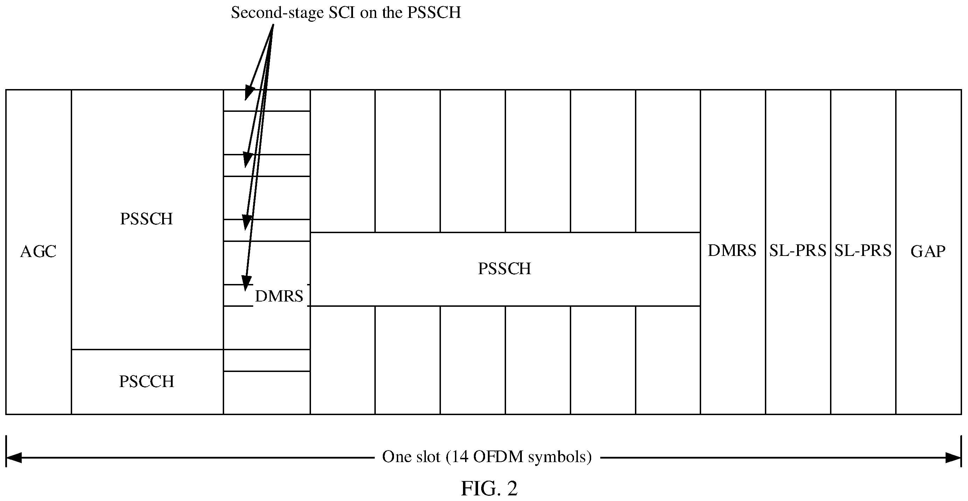

Sidelink (sidelink) communication means that a terminal A sends, on a resource pool, a physical sidelink control channel (physical sidelink control channel, PSCCH), a physical sidelink shared channel (physical sidelink shared channel, PSSCH), and a demodulation reference signal (demodulation reference signal, DMRS) used to demodulate a corresponding channel, and no SL-PRS is sent on the resource pool. In a sidelink communication process, the terminal A sends the PSCCH and the PSSCH to a terminal B. In addition, the terminal A may also send an SL-PRS. A resource pool that may be used to send the PSSCH and the SL-PRS is referred to as a shared resource pool, and means that the terminal may send the PSSCH and the SL-PRS on the same resource pool. FIG. 2 is a diagram of an example of sidelink channel and signal mapping according to an embodiment of this application. An example in which one slot (slot) includes 14 orthogonal frequency division multiplexing (orthogonal frequency division multiplexing, OFDM) symbols is used to show a resource mapping diagram of PSCCH, PSSCH, DMRS, and SL-PRS sending. A PSCCH carries first-stage sidelink control information (sidelink control information, SCI) SCI 1-A, and is used to schedule a PSSCH and second-stage SCI carried on the PSSCH. Both the first-stage SCI and the second-stage SCI are sidelink control information, including complete control information for scheduling the PSSCH and an SL-PRS. A DMRS is a demodulation reference signal used to demodulate data. The SL-PRS is a positioning reference signal sent by the terminal A.

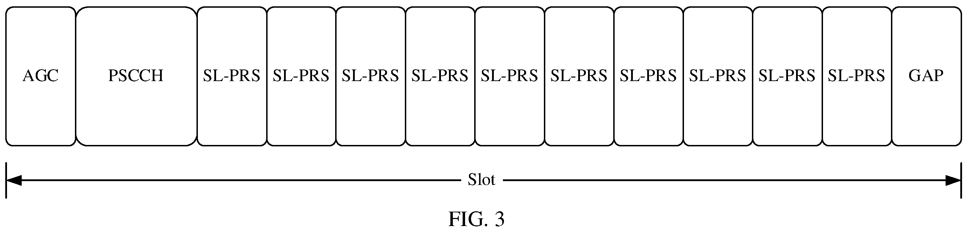

In addition, the SL-PRS may alternatively be sent/received between terminals only on a dedicated resource pool. FIG. 3 is a diagram of an example of a dedicated SL-PRS resource pool according to an embodiment of this application. An example in which one slot includes 14 OFDM symbols is used to show resource mapping of PSCCH and SL-PRS sending on the dedicated resource pool in the figure. A PSCCH channel carries first-stage SCI information SCI 1-B, and is used to schedule an SL-PRS for sending. The first-stage SCI are sidelink control information, including complete control information for scheduling the SL-PRS.

This application mainly relates to SL-PRS transmission on the dedicated resource pool.

When the SL-PRS is sent on the dedicated resource pool, there are two resource allocation modes.

Mode 1: A resource for sending the SL-PRS may be a resource dynamically scheduled (dynamic grant, DG) by an access network device, or a configured grant (configured grant, CG) resource.

Mode 2: A terminal autonomously determines a sending resource. Specifically, a higher layer (MAC/RRC layer) inside the terminal requests the terminal to determine a resource set, and the higher layer selects a resource from the resource set to send the SL-PRS.

For the resource allocation mode 1, the configured grant CG resource includes two types:
Configured grant type 1 (CG Type1): An SL-PRS resource grant is provided by the access network device for a transmitting terminal by using dedicated signaling RRC. After receiving the configuration information, the transmitting terminal stores the SL-PRS resource grant. When the SL-PRS needs to be sent, the configured grant resource is directly used to send the SL-PRS.
Configured grant type 2 (CG Type2): An SL-PRS resource grant is activated or deactivated by a physical downlink control channel (physical downlink control channel, PDCCH). When the PDCCH activates the CG Type2 resource, the transmitting terminal stores the SL-PRS resource grant. When the PDCCH deactivates the CG Type2 resource, the transmitting terminal clears the stored SL-PRS resource grant.

For the CG Type1, resource configurations provided by the access network device include at least a resource pool index, a CG index, a CG periodicity, a time domain resource position, a reference system frame number (system frame number, SFN) used to determine a time domain offset of a resource in time domain, a time offset relative to the reference system frame number, an SL-PRS resource identifier (identifier, ID), a quantity of SL-PRS symbols, an SL-PRS density in frequency domain, and an SL-PRS offset in frequency domain.

For the CG Type2, resource configurations provided by the access network device include at least a CG index, a CG periodicity, an SL-PRS resource identifier (identifier, ID), a quantity of SL-PRS symbols, an SL-PRS density in frequency domain, and an SL-PRS offset in frequency domain. Downlink control information DCI 3_2 used to schedule the SL-PRS resource is used to activate or deactivate the CG Type2.

For the CG Type2, when the downlink control information DCI 3_2 is used to activate or deactivate the SL-PRS CG Type2, if the terminal does not receive a PDCCH carrying the DCI 3_2, or receives a PDCCH but does not feed back, to the access network device, acknowledgement (acknowledgement, ACK) information indicating that the PDCCH is correctly received, the access network device cannot determine whether the terminal correctly receives the PDCCH, and therefore cannot determine whether the SL-PRS CG Type2 is activated or deactivated. If the access network device considers that the CG Type2 has been activated, but the terminal considers that the CG Type2 has not been activated, the access network device reserves a resource corresponding to the CG Type2, but actually the terminal does not perform sending on the CG Type2 resource, causing a waste of resources.

Currently, there is no technology about how to feed back a status of the CG Type2.

For sidelink communication including PSCCH and PSSCH channel sending, there are also two resource allocation modes.

Mode 1: A resource for sidelink communication may be a resource dynamically scheduled by the access network device, or a configured grant resource.

Mode 2: The terminal autonomously determines a sending resource. Specifically, the higher layer inside the terminal requests the terminal to determine a resource set, and the higher layer selects a resource from the resource set to perform sidelink communication.

For the resource allocation mode 1, the configured grant resource includes two types:
CG Type1: A sidelink resource grant is provided by the access network device for the transmitting terminal by using dedicated signaling RRC. After receiving the configuration information, the transmitting terminal stores the sidelink resource grant. When sidelink communication needs to be performed, the configured grant resource is directly used to perform sidelink communication.
CG Type2: A sidelink resource grant is activated or deactivated by a PDCCH. When the PDCCH activates the CG Type2 resource, the transmitting terminal stores the sidelink resource grant. When the PDCCH deactivates the CG Type2 resource, the transmitting terminal clears the stored sidelink resource grant.

If the terminal receives downlink control information DCI 3_0 carried on the PDCCH, where the downlink control information DCI 3_0 indicates to deactivate a CG Type2 resource, a MAC entity of the transmitting terminal triggers deactivation confirmation of the CG Type2 resource. After the terminal sends a medium access control control element (media access control control element, MAC CE) for confirming that the CG Type2 resource is deactivated, the MAC entity clears the stored CG Type2 resource. Alternatively, if the terminal receives downlink control information DCI 3_0 carried on the PDCCH, where the downlink control information DCI 3_0 indicates to activate a CG Type2 resource, a MAC entity of the transmitting terminal triggers confirmation of the CG Type2 resource and stores the CG Type2 resource, and the terminal sends a MAC CE for confirming that the CG Type2 resource is activated.

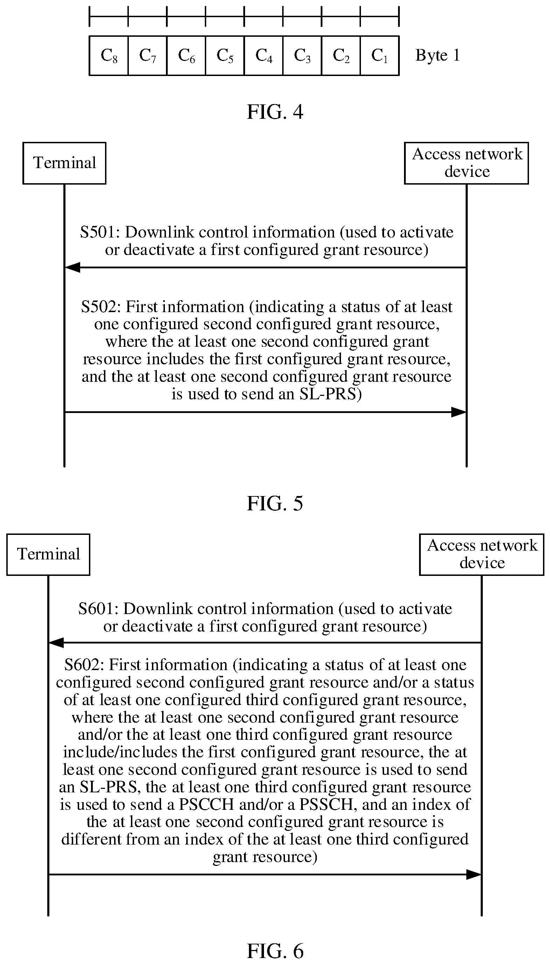

FIG. 4 is a diagram of a format of a MAC CE. A MAC header in the MAC CE includes a special extended logical channel identifier (extended logic channel identifier, eLCID) number, and the eLCID number is used to associate CG Type2 resource confirmation in the foregoing sidelink communication scenario. The MAC CE includes eight fields (Cᵢ), and Cᵢ is defined as follows: If the CG Type2 is configured for the terminal, and an index sl-ConfigIndexCG of the CG configured for the terminal is i, the field Cᵢ indicates that an activated or deactivated state of the CG Type2 resource whose index sl-ConfigIndexCG is i is confirmed. If an index sl-ConfigIndexCG of the configured CG Type2 resource does not have i, Cᵢ is ignored. When Cᵢ is set to 1, it indicates that the CG Type2 resource whose corresponding index sl-ConfigIndexCG is i is confirmed to be activated. When Cᵢ is set to 0, it indicates that the CG Type2 resource whose corresponding index sl-ConfigIndexCG is i is confirmed to be deactivated.

However, the MAC CE can be used to confirm only an activated or deactivated state of a CG Type2 resource configured for sidelink communication, and cannot be used to confirm an activated or deactivated state of a CG Type2 resource of an SL-PRS in a dedicated SL-PRS resource pool. Alternatively, the MAC CE cannot be used to confirm both an activated or deactivated state of a CG Type2 resource configured for sidelink communication and an activated or deactivated state of a CG Type2 resource of an SL-PRS in a dedicated SL-PRS resource pool.

In view of this, the activated or deactivated state of the CG Type2 resource of the SL-PRS in the dedicated SL-PRS resource pool needs to be confirmed. Further, both the activated or deactivated state of the CG Type2 resource configured for sidelink communication and the activated or deactivated state of the CG Type2 resource of the SL-PRS in the dedicated SL-PRS resource pool can be confirmed.

For the foregoing problem, the following provides descriptions by using a plurality of embodiments.

FIG. 5 is a schematic flowchart of a resource status confirmation method according to an embodiment of this application. For example, the method may include the following steps.

S501: An access network device sends downlink control information (downlink control information, DCI) to a terminal. Correspondingly, the terminal receives the downlink control information.

In this embodiment, at least one second configured grant resource is configured for the terminal. The at least one second configured grant resource is used to send an SL-PRS. The at least one second configured grant resource is a resource in a dedicated resource pool used for SL-PRS transmission.

The at least one second configured grant resource is a CG Type2 resource. When the access network device schedules a configured grant resource in the at least one second configured grant resource for SL-PRS transmission, the access network device may send downlink control information to the terminal, where the downlink control information is used to activate a first configured grant resource. The first configured grant resource is any one or more resources in the at least one second configured grant resource. In addition, when the first configured grant resource needs to be released, the access network device may send downlink control information to the terminal, where the downlink control information is used to deactivate the first configured grant resource.

Further, the downlink control information includes an index of the first configured grant resource. Each configured grant resource has a unique index.

For example, the downlink control information may be sent by an O-DU or an O-RU.

For example, the downlink control information is DCI 3_2. The access network device may configure eight configured grant resources C₁ to C₈ for the terminal.

S502: The terminal sends first information to the access network device in response to the downlink control information. Correspondingly, the access network device receives the first information.

For example, the first information may be received by an O-CU-CP.

After receiving the downlink control information, the terminal needs to feed back a status of the at least one second configured grant resource to the access network device. For example, a status of each of the at least one second configured grant resource is fed back to the access network device. The status includes an activated state and a deactivated state. Therefore, the terminal sends the first information to the access network device. The first information indicates the status of the at least one configured second configured grant resource.

In addition, the method may further include: The terminal receives DCI 3_0 sent by the access network device, where the DCI 3_0 is used to activate or deactivate a fourth configured grant resource, and the fourth configured grant resource is any resource in at least one third configured grant resource. The terminal sends second information to the access network device.

The first information includes a first identifier. The first identifier is different from a second identifier in the second information, the second information indicates a status of the at least one configured third configured grant resource, and the at least one third configured grant resource is used to send a PSCCH and/or a PSSCH, that is, the at least one third configured grant resource is used for sidelink communication.

The first identifier in the first information is different from the second identifier in the second information, so that after receiving the first information and the second information, the access network device can distinguish, based on the first identifier and the second identifier, whether the first information or the second information is received, and therefore distinguish whether the received information is used to confirm a status of a CG Type2 resource for sending the SL-PRS or is used to confirm a status of a CG Type2 resource configured for sidelink communication.

For example, the first information is a first MAC CE, and the first MAC CE indicates the status of the at least one configured second configured grant resource. For a format of the first MAC CE, refer to FIG. 4. The format of the first MAC CE is the same as a format of a MAC CE used to confirm the status of the CG Type2 resource configured for sidelink communication. The first MAC CE includes eight fields (Cᵢ), and Cᵢ is defined as follows:
If an SL-PRS CG Type2 is configured for the terminal, and an index sl-PRS-ConfigIndexCG of the CG configured for the terminal is i, the field Cᵢ indicates that an activated or deactivated state of the SL-PRS CG Type2 resource whose index sl-PRS-ConfigIndexCG is i is confirmed. If an index sl-PRS-ConfigIndexCG of the configured SL-PRS CG Type2 resource does not have i, Cᵢ is ignored. When Cᵢ is set to 1, it indicates that the SL-PRS CG Type2 resource whose corresponding index sl-PRS-ConfigIndexCG is i is confirmed to be activated. When Cᵢ is set to 0, it indicates that the SL-PRS CG Type2 resource whose corresponding index sl-PRS-ConfigIndexCG is i is confirmed to be deactivated.

The first identifier is a first eLCID number, and the first eLCID number is in a header of the first MAC CE. For example, a first eLCID code point is 253, and a corresponding index value is 317.

For example, if the terminal receives the DCI 3_2 carried on a PDCCH, where the DCI 3_2 indicates to deactivate an SL-PRS CG Type2 resource, a MAC entity of the transmitting terminal triggers deactivation confirmation of the SL-PRS CG Type2 resource. After the terminal sends a MAC CE for confirming that the SL-PRS CG Type2 resource is deactivated, the MAC entity clears the stored SL-PRS CG Type2 resource. Alternatively, if the terminal receives the DCI 3_2 carried on a PDCCH, where the DCI 3_2 indicates to activate an SL-PRS CG Type2 resource, a MAC entity of the transmitting terminal triggers confirmation of the SL-PRS CG Type2 resource and stores the SL-PRS CG Type2 resource, and the terminal sends a MAC CE for confirming that the SL-PRS CG Type2 resource is activated.

The second information is a second MAC CE, and the second MAC CE indicates the status of the at least one configured third configured grant resource. The second information is used to respond to the DCI 3_0. The status includes an activated state and a deactivated state. The second identifier is a second eLCID number, and the second eLCID number is in a header of the second MAC CE.

On a dedicated SL-PRS resource pool, confirmation of the status of the SL-PRS CG Type2 resource is performed without affecting confirmation of the status of the CG Type2 resource used for sidelink communication. Alternatively, the status of the SL-PRS CG Type2 resource and the status of the CG Type2 resource used for sidelink communication may be confirmed in parallel, where the two confirmations are independent of each other. An index of the SL-PRS CG Type2 resource may be the same as or different from an index of the CG Type2 resource used for sidelink communication. The index configurations of the two resources are also independent of each other.

According to the resource status confirmation method provided in this embodiment of this application, when receiving the downlink control information that is used to activate or deactivate the first configured grant resource and that is sent by the access network device, the terminal sends the first information to the access network device, where the first information indicates the status of the at least one configured second configured grant resource, and the first identifier included in the first information is different from the second identifier in the second information used to confirm the status of the CG Type2 resource configured for sidelink communication, so that the status of the CG Type2 resource used to send the SL-PRS is confirmed, with no conflict with the second information.

In another embodiment, a communication method is further provided. The method includes the following steps: An access network device sends first downlink control information to a terminal. Correspondingly, the terminal receives the first downlink control information. For example, the first downlink control information may be DCI 3_2. At least one second configured grant resource is configured for the terminal. The at least one second configured grant resource is used to send an SL-PRS. The at least one second configured grant resource is a resource in a dedicated resource pool used for SL-PRS transmission. The first downlink control information is used to activate a first configured grant resource. The first configured grant resource is any one or more resources in the at least one second configured grant resource. The access network device sends second downlink control information to the terminal. Correspondingly, the terminal receives the second downlink control information. For example, the second downlink control information may be DCI 3_0. The second downlink control information is used to activate or deactivate a fourth configured grant resource, and the fourth configured grant resource is any resource in at least one third configured grant resource. First information includes a first identifier. The first identifier is different from a second identifier in second information, the second information indicates a status of the at least one configured third configured grant resource, and the at least one third configured grant resource is used to send a PSCCH and/or a PSSCH, that is, the at least one third configured grant resource is used for sidelink communication. The terminal sends the first information to the access network device in response to the first downlink control information. Correspondingly, the access network device receives the first information. The first information indicates a status of the at least one configured second configured grant resource. The terminal sends the second information to the access network device in response to the second downlink control information. Correspondingly, the access network device receives the second information. The second information indicates the status of the at least one configured third configured grant resource. It may be understood that a transmission sequence of the first downlink control information and the second downlink control information is not limited in this embodiment, and a transmission sequence of the first information and the second information is not limited either.

In the foregoing embodiment descriptions, the status of the CG Type2 resource configured for sidelink communication is confirmed by using the first eLCID number in the newly defined first MAC CE header, and the first MAC CE does not conflict with the second MAC CE used to confirm the status of the CG Type2 resource of the SL-PRS in the dedicated SL-PRS resource pool.

In the following embodiment descriptions, the status of the CG Type2 resource configured for sidelink communication may be confirmed by using an existing MAC CE used to confirm the status of the CG Type2 resource of the SL-PRS in the dedicated SL-PRS resource pool.

FIG. 6 is a schematic flowchart of another resource status confirmation method according to an embodiment of this application. For example, the method may include the following steps.

S601: An access network device sends downlink control information to a terminal. Correspondingly, the terminal receives the downlink control information.

For example, the downlink control information may be sent by an O-DU or an O-RU.

In this embodiment, at least one second configured grant resource is configured for the terminal. The at least one second configured grant resource is used to send an SL-PRS. The at least one second configured grant resource is a resource in a dedicated resource pool used for SL-PRS transmission.

At least one third configured grant resource is further configured for the terminal. The at least one third configured grant resource is used to send a PSCCH and/or a PSSCH, that is, the at least one third configured grant resource is used for sidelink communication.

An index of the at least one second configured grant resource is different from an index of the at least one third configured grant resource.

The at least one second configured grant resource and the at least one third configured grant resource are CG Type2 resources. When the access network device schedules a configured grant resource in the at least one second configured grant resource for SL-PRS transmission, or schedules a configured grant resource in the at least one third configured grant resource to perform sidelink communication, the access network device may send downlink control information to the terminal, where the downlink control information is used to activate a first configured grant resource. The first configured grant resource is any one or more resources in the at least one second configured grant resource or the at least one third configured grant resource. In addition, when the first configured grant resource needs to be released, the access network device may send downlink control information to the terminal, where the downlink control information is used to deactivate the first configured grant resource.

Further, the downlink control information includes an index of the first configured grant resource. Each configured grant resource has a unique index.

S602: The terminal sends first information to the access network device in response to the downlink control information. Correspondingly, the access network device receives the first information.

For example, the first information may be received by an O-DU or an O-RU.

After receiving the downlink control information, the terminal needs to feed back a status of the at least one second configured grant resource to the access network device. Therefore, the terminal sends the first information to the access network device. In this embodiment, the first information reuses existing feedback information used to confirm a status of a CG Type2 resource configured for sidelink communication. Therefore, the first information indicates the status of the at least one configured second configured grant resource and/or a status of the at least one configured third configured grant resource. The index of the at least one second configured grant resource is different from the index of the at least one third configured grant resource.

The index of the at least one second configured grant resource is set to be different from the index of the at least one third configured grant resource, so that when receiving the first information, the access network device can determine, based on the indexes of the resources, a resource corresponding to a fed-back status of any one of the resources, and therefore know a status of a CG Type2 resource used for SL-PRS transmission and the status of the CG Type2 resource configured for sidelink communication.

For example, the first information is a MAC CE. For a format of the MAC CE, refer to FIG. 4. The MAC CE includes a first field and/or a second field, the first field indicates the status of the at least one second configured grant resource, and the second field indicates the status of the at least one third configured grant resource. The status includes an activated state and a deactivated state. A sum of a quantity of the at least one second configured grant resource and a quantity of the at least one third configured grant resource is less than or equal to a first threshold. For example, the first threshold may be 8. For example, in the MAC CE, C₁ to C₄ correspond to the status of the CG Type2 resource for SL-PRS transmission, and C₅ to C₈ correspond to the status of the CG Type2 resource configured for sidelink communication.

For example, in the dedicated SL-PRS resource pool, in a resource allocation mode 1, the CG Type2 resource that is used for SL-PRS transmission and whose index is *sl-PRS-ConfigIndexCG* is configured for the terminal. In a sidelink communication resource pool, the CG Type2 resource that is used for sidelink communication and whose index is *sl-ConfigIndexCG* is configured. In this case, for the same terminal, a sum of a quantity of configured SL-PRS CG Type2 sets and a quantity of configured CG Type2 resource sets for sidelink communication does not exceed 8, an index of the configured SL-PRS CG Type2 is different from an index of the configured CG Type2 resource for sidelink communication, and the access network device does not configure an index value of the SL-PRS CG Type2 to be the same as an index value of the CG Type2 for sidelink communication.

If the terminal receives DCI 3_2 carried on a PDCCH, where the DCI 3_2 indicates to deactivate an SL-PRS CG Type2 resource, or receives DCI 3_0 carried on a PDCCH, where the DCI 3_0 indicates to deactivate a sidelink CG Type2 resource, a MAC entity of the transmitting terminal triggers deactivation confirmation of the SL-PRS CG Type2 resource in response to the DCI 3_2 or deactivation confirmation of the sidelink CG Type2 resource in response to the DCI 3_0. After the terminal sends a MAC CE for confirming that the SL-PRS CG Type2 resource and/or the sidelink CG Type2 resource are/is deactivated, the MAC entity clears the stored SL-PRS CG Type2 resource and/or the sidelink CG Type2 resource. Alternatively, if the terminal receives DCI 3_2 carried on a PDCCH, where the DCI 3_2 indicates to activate an SL-PRS CG Type2 resource, or receives DCI 3_0 carried on a PDCCH, where the DCI 3_0 indicates to activate a sidelink CG Type2 resource, a MAC entity of the transmitting terminal triggers confirmation of the SL-PRS CG Type2 resource and/or the sidelink CG Type2 resource, and stores the SL-PRS CG Type2 resource or the sidelink CG Type2 resource, and the terminal sends a MAC CE for confirming that the SL-PRS CG Type2 resource and/or the sidelink CG Type2 resource are/is activated. Specifically, when receiving the DCI 3_0, when the terminal has not sent a confirmation message in response to 3_0 before receiving the DCI 3_2, the terminal sends a confirmation message MAC CE in response to the DCI 3_0 and the DCI 3_2 after receiving the DCI 3_2, where the MAC CE includes the confirmation of the SL-PRS CG Type2 resource and the sidelink CG Type2 resource. Alternatively, when receiving the DCI 3_2, when the terminal has not sent a confirmation message in response to 3_2 before receiving the DCI 3_0, the terminal sends a confirmation message MAC CE in response to the DCI 3_0 and the DCI 3_2 after receiving the DCI 3_0, where the MAC CE includes the confirmation of the SL-PRS CG Type2 resource and the sidelink CG Type2 resource.

Therefore, the same confirmation MAC CE may be used to confirm a status of the SL-PRS CG Type2 resource, or confirm statuses of both the SL-PRS CG Type2 resource and the sidelink CG Type2 resource.

According to the resource status confirmation method provided in this embodiment of this application, the index of the CG Type2 resource configured for sidelink communication is set to be different from the index of the CG Type2 resource of the SL-PRS in the dedicated SL-PRS resource pool, so that both the status of the CG Type2 resource configured for sidelink communication and the status of the CG Type2 resource of the SL-PRS in the dedicated SL-PRS resource pool can be confirmed by using one piece of information.

In the foregoing embodiment descriptions, the index of the CG Type2 resource configured for sidelink communication is set to be different from the index of the CG Type2 resource of the SL-PRS in the dedicated SL-PRS resource pool, so that the status of the CG Type2 resource of the SL-PRS in the dedicated SL-PRS resource pool can be confirmed by reusing an existing MAC CE format used to confirm the status of the CG Type2 resource configured for sidelink communication.

In the following embodiment descriptions, both the status of the CG Type2 resource of the SL-PRS in the dedicated SL-PRS resource pool and the status of the CG Type2 resource configured for sidelink communication are confirmed by confirming the status of the SL-PRS CG Type2 resource or the sidelink CG Type2 resource in a time division manner.

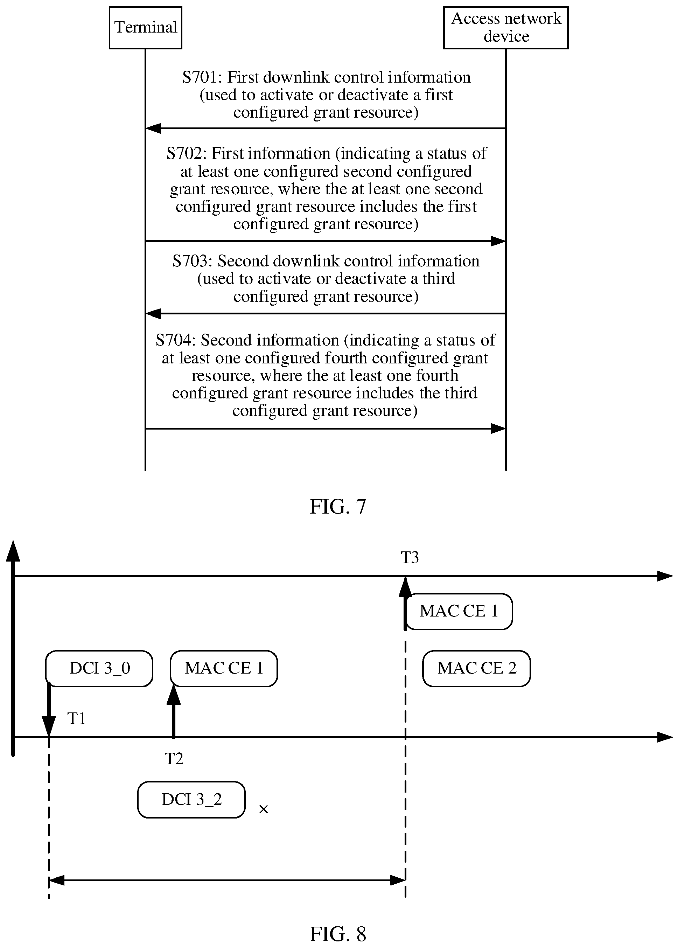

FIG. 7 is a schematic flowchart of still another resource status confirmation method according to an embodiment of this application. For example, the method may include the following steps.

S701: An access network device sends first downlink control information to a terminal. Correspondingly, the terminal receives the first downlink control information.

In this embodiment, at least one second configured grant resource is configured for the terminal. The at least one second configured grant resource is used to carry a first channel or a first signal.

The at least one second configured grant resource is a CG Type2 resource. When the access network device schedules a configured grant resource in the at least one second configured grant resource for transmission of the first channel or the first signal, the access network device may send first downlink control information to the terminal, where the first downlink control information is used to activate a first configured grant resource. The first configured grant resource is any one or more resources in the at least one second configured grant resource. In addition, when the first configured grant resource needs to be released, the access network device may send first downlink control information to the terminal, where the first downlink control information is used to deactivate the first configured grant resource.

Further, the first downlink control information includes an index of the first configured grant resource.

S702: The terminal sends first information to the access network device in response to the first downlink control information. Correspondingly, the access network device receives the first information.

After receiving the first downlink control information, the terminal needs to feed back a status of the at least one second configured grant resource to the access network device. For example, a status of each of the at least one second configured grant resource is fed back to the access network device. The status includes an activated state and a deactivated state. Therefore, the terminal sends the first information to the access network device. The first information indicates the status of the at least one configured second configured grant resource.

For example, the first information is a first MAC CE, and the first MAC CE indicates the status of the at least one configured second configured grant resource. For a format of the first MAC CE, refer to FIG. 4.

S703: The access network device sends second downlink control information to the terminal. Correspondingly, the terminal receives the second downlink control information.

In this embodiment, at least one fourth configured grant resource is configured for the terminal. The at least one fourth configured grant resource is used to carry a second channel or a second signal.

The at least one fourth configured grant resource is a CG Type2 resource. When the access network device schedules a configured grant resource in the at least one fourth configured grant resource for transmission of the second channel or the second signal, the access network device may send second downlink control information to the terminal, where the second downlink control information is used to activate a third configured grant resource. The third configured grant resource is any one or more resources in the at least one fourth configured grant resource. In addition, when the third configured grant resource needs to be released, the access network device may send second downlink control information to the terminal, where the second downlink control information is used to deactivate the third configured grant resource.

Further, the second downlink control information includes an index of the third configured grant resource. The index of the first configured grant resource included in the first downlink control information may be the same as or different from the index of the third configured grant resource included in the second downlink control information. An index of the at least one second configured grant resource and an index of the at least one fourth configured grant resource are independently configured.

S704: The terminal sends second information to the access network device in response to the second downlink control information. Correspondingly, the access network device receives the second information.

After receiving the second downlink control information, the terminal needs to feed back a status of the at least one fourth configured grant resource to the access network device. For example, a status of each of the at least one fourth configured grant resource is fed back to the access network device. The status includes an activated state and a deactivated state. Therefore, the terminal sends the second information to the access network device. The second information indicates the status of the at least one configured fourth configured grant resource.

For example, the second information is a second MAC CE, and the second MAC CE indicates the status of the at least one configured fourth configured grant resource. For a format of the second MAC CE, refer to FIG. 4.

The first channel is different from the second channel, and the first signal is different from the second signal. In other words, a channel or a signal carried on the at least one second configured grant resource is different from a channel or a signal carried on the at least one fourth configured grant resource.

In this embodiment, the terminal does not receive the second downlink control information before sending the first information.

For example, for the terminal, that the terminal does not receive the second downlink control information before sending the first information may also be understood as that the terminal does not expect the access network device to send the second downlink control information, or the terminal receives the second downlink control information after sending the first information. For the access network device, that the access network device does not send the second downlink control information before receiving the first information may also be understood as that before receiving the first information, the access network device does not require the terminal to receive the second downlink control information, or the access network device sends the second downlink control information after receiving the first information.

For example, in a dedicated SL-PRS resource pool, in a resource allocation mode 1, an SL-PRS CG Type2 resource whose index is *sl-PRS-ConfigIndexCG* is configured for the terminal. In this case, the index of the configured SL-PRS CG Type2 is independent of an index of a CG Type2 resource for sidelink communication, that is, index values may be the same or different.

FIG. 8 is a diagram of resource status confirmation according to the embodiment shown in FIG. 7. After the access network device sends DCI 3_0 to activate or deactivate the sidelink CG Type2 resource, and before the access network device correctly receives a MAC CE 1 that is for confirming a status of the sidelink CG Type2 and that is sent by the transmitting terminal, that is, in a time period from T1 to T3, the access network device does not send DCI 3_2 to activate or deactivate the SL-PRS CG Type2 resource configured in the dedicated SL-PRS resource pool, so that after the access network device receives the MAC CE, the access network device and the terminal can have a same understanding: The MAC CE corresponds to the confirmation of the status of the CG Type2 resource for sidelink communication.

Alternatively, after the access network device sends DCI 3_2 to activate or deactivate the SL-PRS CG Type2 resource, and before the access network device correctly receives a MAC CE 2 that is for confirming the SL-PRS CG Type2 resource and that is sent by the transmitting terminal, that is, in a time period from T1 to T3, the access network device does not send DCI 3_0 to activate or deactivate the CG Type2 resource for sidelink communication, so that after the access network device receives the MAC CE, the access network device and the terminal can have a same understanding: The MAC CE corresponds to confirmation of a status of the SL-PRS CG Type2 resource.

For example, the first downlink control information and/or the second downlink control information may be sent by an O-DU or an O-RU, and the first information and/or the second information may be received by an O-CU-CP.

According to the resource status confirmation method provided in this embodiment of this application, before sending the first information used to confirm the status of the at least one second configured grant resource, the terminal does not receive the second control information that is used to activate or deactivate the third configured grant resource and that is sent by the access network device, and before receiving the first information, the access network device does not require the terminal to receive the second downlink control information, so that both the terminal and the access network device confirm that the first information is used to confirm the status of the at least one second configured grant resource, thereby accurately feeding back the status of the configured grant resource.

It may be understood that in this application, an example in which an access network device and a terminal serve as execution bodies of an interaction example is used for description. However, the execution body of the interaction example is not limited in this application. For example, the access network device in the method provided in this application may alternatively be a chip, a chip system, or a processor used in the access network device, or may be a logical node, a logical module, or software that can implement a whole or a part of the access network device. The terminal in the method provided in this application may alternatively be a chip, a chip system, or a processor used in the terminal, or may be a logical node, a logical module, or software that can implement all or some functions of the terminal.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and the terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, in the foregoing embodiments, the method and/or steps implemented by the access network device may alternatively be implemented by a component (for example, a chip or a circuit) used in the access network device, and the method and/or steps implemented by the terminal may alternatively be implemented by a component (for example, a chip or a circuit) used in the terminal.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the access network device in the foregoing method embodiments, or a component that can be used in the access network device. Alternatively, the communication apparatus may be the terminal in the foregoing method embodiments, or a component that can be used in the terminal. It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules according to the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, division into the modules is an example, is merely logical function division, and may be other division in actual implementation.

Based on a same concept as the foregoing resource status confirmation method, this application further provides the following communication apparatuses.

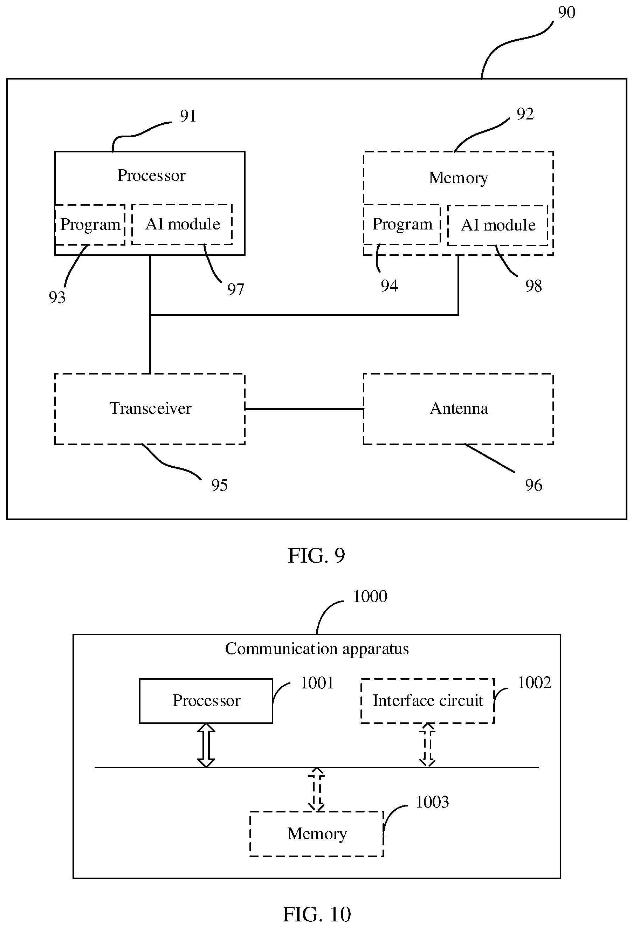

FIG. 9 is a diagram of a structure of a possible communication apparatus. It may be understood that the communication apparatus 90 includes means (means) in necessary forms, such as modules, units, elements, circuits, or interfaces, which are appropriately disposed together to perform the solutions. The communication apparatus 90 may be the RAN node or the terminal in FIG. 1, or may be a component (for example, a chip) in these devices, to implement the method described in the foregoing method embodiments. The communication apparatus 90 includes one or more processors 91 (one processor is used as an example in the figure). The processor 91 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 91 may include a program 93 (which may also be sometimes referred to as code or instructions). The program 93 may be run on the processor 91, to cause the communication apparatus 90 to perform the method described in the foregoing embodiments. In another possible design, the communication apparatus 00 includes a circuit (not shown in FIG. 9), and the circuit is configured to implement a function of the access network device or the terminal in the foregoing embodiments.

Optionally, the communication apparatus 90 may include one or more memories 92 (one memory is used as an example in the figure), and a program 94 (which may also be sometimes referred to as code or instructions) is stored on the memory. The program 94 may be run on the processor 91, to cause the communication apparatus 90 to perform the method described in the foregoing method embodiments.

Optionally, the processor 91 and/or the memory 92 may include artificial intelligence (artificial intelligence, AI) modules 97 and 98. The AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

Optionally, the processor 91 and/or the memory 92 may further store data. The processor and the memory may be separately disposed, or may be integrated together.

Optionally, the communication apparatus 90 may further include a transceiver 95 and/or an antenna 96. The processor 91 may also be sometimes referred to as a processing unit, and controls the communication apparatus (for example, the RAN node or the terminal). The transceiver 95 may also be sometimes referred to as a transceiver unit, a transceiver machine, a transceiver circuit, a transceiver, or the like, and is configured to implement a transceiver function of the communication apparatus through the antenna 96. For example, the transceiver 95 may include a receiver and a transmitter. The receiver and the transmitter may be a whole, or may be independent devices.

When the communication apparatus 90 is configured to implement the function of the terminal, the receiver is configured to implement the receiving action in step S501 in the embodiment shown in FIG. 5, the transmitter is configured to implement the sending action in step S502 in the embodiment shown in FIG. 5, and other steps such as information generation in the embodiment are implemented by the processor 91; or the receiver is configured to implement the receiving action in step S601 in the embodiment shown in FIG. 6, the transmitter is configured to implement the sending action in step S602 in the embodiment shown in FIG. 6, and other steps such as information generation in the embodiment are implemented by the processor 91; or the receiver is configured to implement the receiving actions in steps S701 and S703 in the embodiment shown in FIG. 7, the transmitter is configured to implement the sending actions in steps S702 and S704 in the embodiment shown in FIG. 7, and other steps such as information generation in the embodiment are implemented by the processor 91.

When the communication apparatus 90 is configured to implement the function of the access network device, the transmitter is configured to implement the sending action in step S501 in the embodiment shown in FIG. 5, the receiver is configured to implement the receiving action in step S502 in the embodiment shown in FIG. 5, and other steps such as information generation in the embodiment are implemented by the processor 91; or the transmitter is configured to implement the sending action in step S601 in the embodiment shown in FIG. 6, the receiver is configured to implement the receiving action in step S602 in the embodiment shown in FIG. 6, and other steps such as information generation in the embodiment are implemented by the processor 91; or the transmitter is configured to implement the sending actions in steps S701 and S703 in the embodiment shown in FIG. 7, the receiver is configured to implement the receiving actions in steps S702 and S704 in the embodiment shown in FIG. 7, and other steps such as information generation in the embodiment are implemented by the processor 91.

FIG. 10 is a diagram of a structure of another communication apparatus according to an embodiment of this application. The communication apparatus 1000 includes a processor 1001. Optionally, the communication apparatus 1000 may further include an interface circuit 1002 (represented by dashed lines in the figure), and the processor 1001 and the interface circuit 1002 are coupled to each other. It may be understood that the interface circuit 1002 may be a transceiver or an input/output interface. Optionally, the communication apparatus 1000 may further include a memory 1003 (represented by dashed lines in the figure). The memory 1003 is configured to: store instructions executed by the processor 1001, or store input data needed by the processor 1001 to run the instructions, or store data generated by running the instructions by the processor 1001. The processor 1001 is configured to implement a function of the processor 91 in the embodiment shown in FIG. 9, and the interface circuit 1002 is configured to implement a function of the transceiver 95 in the embodiment shown in FIG. 9.

When the communication apparatus is a chip used in an access network device, the chip implements a function of the access network device in the foregoing method embodiments. The chip receives information from another module (for example, a radio frequency module or an antenna) in the access network device, and the information is sent by a terminal to the access network device. Alternatively, the chip sends information to another module (for example, a radio frequency module or an antenna) in the access network device, and the information is sent by the access network device to a terminal.

When the communication apparatus is a chip used in a terminal, the chip implements a function of the terminal in the foregoing method embodiments. The chip receives information from another module (for example, a radio frequency module or an antenna) in the terminal, and the information is sent by an access network device to the terminal. Alternatively, the chip sends information to another module (for example, a radio frequency module or an antenna) in the terminal, and the information is sent by the terminal to an access network device.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

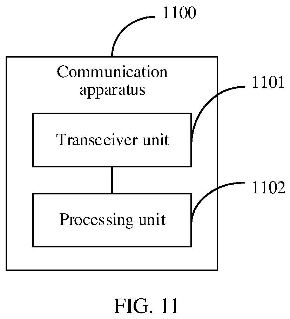

FIG. 11 is a diagram of a structure of still another communication apparatus according to an embodiment of this application. The communication apparatus 1100 includes a transceiver unit 1101 and a processing unit 1102.

When the communication apparatus 1100 is configured to implement a function of a terminal, the transceiver unit 1101 is configured to perform the operations of the terminal in steps S501 and S502 in the embodiment shown in FIG. 5, or the transceiver unit 1101 is configured to perform the operations of the terminal in steps S601 and S602 in the embodiment shown in FIG. 6, or the transceiver unit 1101 is configured to perform the operations of the terminal in steps S701 to S704 in the embodiment shown in FIG. 7.

When the communication apparatus 1100 is configured to implement a function of an access network device, the transceiver unit 1101 is configured to perform the operations of the access network device in steps S501 and S502 in the embodiment shown in FIG. 5, or the transceiver unit 1101 is configured to perform the operations of the access network device in steps S601 and S602 in the embodiment shown in FIG. 6, or the transceiver unit 1101 is configured to perform the operations of the access network device in steps S701 to S704 in the embodiment shown in FIG. 7.

For example, the transceiver unit 1101 may include a receiving unit and a sending unit. The receiving unit and the sending unit may be a whole, or may be independent units.

When the communication apparatus 1100 is configured to implement the function of the terminal, the receiving unit is configured to implement the receiving action in step S501 in the embodiment shown in FIG. 5, the sending unit is configured to implement the sending action in step S502 in the embodiment shown in FIG. 5, and other steps such as information generation in the embodiment are implemented by the processor 91; or the receiving unit is configured to implement the receiving action in step S601 in the embodiment shown in FIG. 6, the sending unit is configured to implement the sending action in step S602 in the embodiment shown in FIG. 6, and other steps such as information generation in the embodiment are implemented by the processor 91; or the receiving unit is configured to implement the receiving actions in steps S701 and S703 in the embodiment shown in FIG. 7, the sending unit is configured to implement the sending actions in steps S702 and S704 in the embodiment shown in FIG. 7, and other steps such as information generation in the embodiment are implemented by the processor 91.

When the communication apparatus 11000 is configured to implement the function of the access network device, the sending unit is configured to implement the sending action in step S501 in the embodiment shown in FIG. 5, the receiving unit is configured to implement the receiving action in step S502 in the embodiment shown in FIG. 5, and other steps such as information generation in the embodiment are implemented by the processor 91; or the sending unit is configured to implement the sending action in step S601 in the embodiment shown in FIG. 6, the receiving unit is configured to implement the receiving action in step S602 in the embodiment shown in FIG. 6, and other steps such as information generation in the embodiment are implemented by the processor 91; or the sending unit is configured to implement the sending actions in steps S701 and S703 in the embodiment shown in FIG. 7, the receiving unit is configured to implement the receiving actions in steps S702 and S704 in the embodiment shown in FIG. 7, and other steps such as information generation in the embodiment are implemented by the processor 91.

For specific implementations of the transceiver unit 1101 and the processing unit 1102, refer to related descriptions in the embodiments shown in FIG. 5 to FIG. 7.

In this application, division into the modules is an example, is merely logical function division, and may be other division in actual implementation. In addition, functional modules in the examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

An embodiment of this application further provides a chip apparatus, including a processor, configured to invoke a computer program or computer instructions stored in a memory, to cause the processor to perform the method provided in any one of the embodiments shown in FIG. 5 to FIG. 7.

In a possible implementation, an input of the chip apparatus corresponds to the receiving operation in any one of the embodiments shown in FIG. 5 to FIG. 7, and an output of the chip apparatus corresponds to the sending operation in any one of the embodiments shown in FIG. 5 to FIG. 7.

Optionally, the processor is coupled to the memory through an interface.

Optionally, the chip apparatus further includes the memory, and the memory stores the computer program or the computer instructions.

When the communication apparatus is a module used in an access network device, the module in the access network device implements a function of the access network device in the foregoing method embodiments. The module in the access network device receives information from another module (for example, a radio frequency module or an antenna) in the access network device, and the information is sent by a terminal to the access network device. Alternatively, the module in the access network device sends information to another module (for example, a radio frequency module or an antenna) in the access network device, and the information is sent by the access network device to a terminal. The module in the access network device herein may be a baseband chip of the access network device, or may be a CU, a DU, or another module, or may be an apparatus in an O-RAN architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in a memory. A processor may be configured to: execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, or a discrete hardware component, and can implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a programmable logic device (programmable logic device, PLD), a dedicated digital circuit, a hardware accelerator, or a non-integrated discrete device. The hardware may run necessary software or do not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

At least one piece (item) in this application indicates one or more pieces (items). A plurality of pieces (items) mean two or more pieces (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects should not be limited by these terms. These terms are merely used for distinguishing the objects from each other.

The terms "include", "have", and any other variant thereof mentioned above are intended to cover non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that, in this application, the word such as "example" or "for example" is used for representing giving an example, an illustration, or a description. Any method or design scheme described as an "example" or "for example" in this application should not be explained as being preferred or having more advantages than another method or design scheme. To be precise, use of the word such as "example" or "for example" is intended to present a relative concept in a specific manner.

A network element in the communication system may send a signal to another network element or receive a signal from another network element. The signal may include information, signaling, data, or the like. The network element may alternatively be replaced with an entity, a network entity, a device, a terminal, a communication module, a node, a communication node, or the like. In this application, the network element is used as an example for description. For example, the communication system may include at least one terminal and at least one network device. The network device may send a downlink signal to the terminal, and/or the terminal may send an uplink signal to the network device. In addition, it may be understood that, if the communication system includes a plurality of terminals, the plurality of terminals may alternatively send signals to each other. In other words, both a signal sending network element and a signal receiving network element may be terminals.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of embodiments have respective focuses. For a part that is not described in detail in an embodiment, refer to related descriptions of another embodiment.

The components in the apparatuses in embodiments of this application may be combined, divided, and deleted based on an actual requirement. A person skilled in the art may combine different embodiments and features of the different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A resource status confirmation method, wherein the method comprises:
receiving downlink control information, wherein the downlink control information is used to activate or deactivate a first configured grant resource; and
sending first information in response to the downlink control information, wherein the first information indicates a status of at least one configured second configured grant resource, the at least one second configured grant resource comprises the first configured grant resource, the at least one second configured grant resource is used to send a sidelink-positioning reference signal, the first information comprises a first identifier, the first identifier is different from a second identifier in second information, the second information indicates a status of at least one configured third configured grant resource, and the at least one third configured grant resource is used to send a physical sidelink control channel and/or a physical sidelink shared channel.

2. A resource status confirmation method, wherein the method comprises:
sending downlink control information, wherein the downlink control information is used to activate or deactivate a first configured grant resource; and
receiving first information in response to the downlink control information, wherein the first information indicates a status of at least one configured second configured grant resource, the at least one second configured grant resource comprises the first configured grant resource, the at least one second configured grant resource is used to send a sidelink-positioning reference signal, the first information comprises a first identifier, the first identifier is different from a second identifier in second information, the second information indicates a status of at least one configured third configured grant resource, and the at least one third configured grant resource is used to send a physical sidelink control channel and/or a physical sidelink shared channel.

3. The method according to claim 1 or 2, wherein the downlink control information comprises an index of the first configured grant resource.

4. The method according to any one of claims 1 to 3, wherein the first information is a first medium access control control element, the first medium access control control element indicates the status of the at least one second configured grant resource, and the status comprises an activated state and a deactivated state.

5. The method according to any one of claims 1 to 4, wherein the first identifier is a first extended logical channel identifier, and the second identifier is a second extended logical channel identifier.

6. A resource status confirmation method, wherein the method comprises:
receiving downlink control information, wherein the downlink control information is used to activate or deactivate a first configured grant resource; and
sending first information in response to the downlink control information, wherein the first information indicates a status of at least one configured second configured grant resource and/or a status of at least one configured third configured grant resource, the at least one second configured grant resource and/or the at least one third configured resource comprise/comprises the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource.

7. A resource status confirmation method, wherein the method comprises:
sending downlink control information, wherein the downlink control information is used to activate or deactivate a first configured grant resource; and
receiving first information in response to the downlink control information, wherein the first information indicates a status of at least one configured second configured grant resource and/or a status of at least one configured third configured grant resource, the at least one second configured grant resource and/or the at least one third configured resource comprise/comprises the first configured grant resource, the at least one second configured grant resource is used to send a sidelink-positioning reference signal, the at least one third configured grant resource is used to send a physical sidelink control channel and/or a physical sidelink shared channel, and an index of the at least one second configured grant resource is different from an index of the at least one third configured grant resource.

8. The method according to claim 6 or 7, wherein the downlink control information comprises an index of the first configured grant resource.

9. The method according to any one of claims 6 to 8, wherein the first information is a medium access control control element, the medium access control control element comprises a first field and/or a second field, the first field indicates the status of the at least one second configured grant resource, the second field indicates the status of the at least one third configured grant resource, and the status comprises an activated state and a deactivated state.

10. The method according to any one of claims 6 to 9, wherein a sum of a quantity of the at least one second configured grant resource and a quantity of the at least one third configured grant resource is less than or equal to a first threshold.

11. A resource status confirmation method, wherein the method comprises:
receiving first downlink control information, wherein the first downlink control information is used to activate or deactivate a first configured grant resource;
sending first information in response to the first downlink control information, wherein the first information indicates a status of at least one configured second configured grant resource, and the at least one second configured grant resource comprises the first configured grant resource;
receiving second downlink control information, wherein the second downlink control information is used to activate or deactivate a third configured grant resource; and
sending second information in response to the second downlink control information, wherein the second information indicates a status of at least one configured fourth configured grant resource, and the at least one fourth configured grant resource comprises the third configured grant resource, wherein
a channel or a signal carried on the at least one second configured grant resource is different from a channel or a signal carried on the at least one fourth configured grant resource, and the second downlink control information is not received before the first information is sent.

12. A resource status confirmation method, wherein the method comprises:
sending first downlink control information, wherein the first downlink control information is used to activate or deactivate a first configured grant resource;
receiving first information in response to the first downlink control information, wherein the first information indicates a status of at least one configured second configured grant resource, and the at least one second configured grant resource comprises the first configured grant resource;
sending second downlink control information, wherein the second downlink control information is used to activate or deactivate a third configured grant resource; and
receiving second information in response to the second downlink control information, wherein the second information indicates a status of at least one configured fourth configured grant resource, and the at least one fourth configured grant resource comprises the third configured grant resource, wherein
a channel or a signal carried on the at least one second configured grant resource is different from a channel or a signal carried on the at least one fourth configured grant resource, and the second downlink control information is not sent before the first information is received.

13. The method according to claim 11 or 12, wherein the first downlink control information comprises an index of the first configured grant resource, and the second downlink control information comprises an index of the third configured grant resource.

14. The method according to any one of claims 11 to 13, wherein the first information is a first medium access control control element, and the first medium access control control element indicates the status of the at least one second configured grant resource; and
the second information is a second medium access control control element, and the second medium access control control element indicates the status of the at least one fourth configured grant resource, wherein
the status comprises an activated state and a deactivated state.

15. A communication apparatus, wherein the apparatus comprises a unit configured to perform the method according to any one of claims 1 to 14.

16. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 14 by using a logic circuit or by executing code instructions.

17. A computer-readable storage medium, wherein the storage medium stores a computer program or instructions, and when the computer program or the instructions are executed by a communication apparatus, the method according to any one of claims 1 to 14 is implemented.

18. A computer program product, wherein the computer program product comprises related program instructions, and when the related program instructions are executed, the method according to any one of claims 1 to 14 is implemented.
